# EUROPÄISCHE PATENTANMELDUNG

(11) **EP 1 085 772 A2**
(43) Veröffentlichungstag der Anmeldung: **21.03.2001**
(21) Anmeldenummer: 00203162.3
(22) Anmeldetag: 12.09.2000
(51) Int. Cl.: H04Q 7/22

(54) **Drahtloses Netzwerk zur Speicherung eines Reservierungs-Wunsches**

(30) Priorität: 18.09.1999 DE 19944862
(71) Anmelder: Philips Corporate Intellectual Property GmbH, 52064 Aachen (DE); Koninklijke Philips Electronics N.V., 5621 BA Eindhoven (NL)
(72) Erfinder: Herrmann, Christoph, Dr.-Ing., 52064 Aachen (DE); Fink, Barbara, 52064 Aachen (DE)
(74) Vertreter: Gössmann, Klemens

(57) **Zusammenfassung**

Die Erfindung bezieht sich auf ein drahtloses Netzwerk mit mindestens einer Basisstation und mehreren zugeordneten Terminals zum Austausch von Nutz- und Steuerdaten. Eine Basisstation ist nach Empfang eines Reservierungs-Wunsches eines Terminals für die Übertragung von Nutzdaten über einen Kanal zur Speicherung des Reservierungs-Wunsches vorgesehen, wenn die Basisstation dem Terminal keinen Kanal zuweisen kann.

## Beschreibung

Die Erfindung bezieht sich auf ein drahtloses Netzwerk mit mindestens einer Basisstation und mehreren zugeordneten Terminals zum Austausch von Nutz- und Steuerdaten.

In dem Dokument 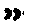 ETSI SMG2, Meeting no 24, Cork Ireland, 1-5 December 1997, Tdoc SMG2 359/97, Concept Group Alpha ― Wideband Direct-Sequence CDMA (WCDMA), EVALUATION DOCUMENT (3.0), Part 1: System Description, Performance Evaluation" wird ein nach dem CDMA-Verfahren (CDMA = Code Division Multiplex Access) arbeitender Funknetzwerk vorgeschlagen. Das Funknetzwerk besteht aus mehreren Funkzellen mit jeweils einer Basisstation und darin befindlichen Terminals oder Mobilstationen. Nach der Registrierung und Synchronisierung eines Terminals, sendet ein Terminal beispielsweise bei einem Wunsch nach einem Kanal für Nutzdaten ein Meldungspaket (Random-Access burst) über einen kollisionsbehafteten Kanal, der als RACH-Kanal bezeichnet wird (RACH = Random Access Channel). Über den RACH-Kanal wird beispielsweise von einem Terminal ein Kanal zur Übertragung von Nutzdaten angefordert. Falls die Basisstation einem Terminal keinen Kanal zuweisen kann, muss ein Terminal nochmals zu einem späteren Zeitpunkt einen Kanal anfordern.

Der Erfindung liegt die Aufgabe zugrunde, ein drahtloses Netzwerk zu schaffen, bei dem der Wunsch nach einem Kanal zur Übertragung von Nutzdaten von den Terminals mit einer geringeren Verkehrsbelastung des durchgeführt wird.

Die Aufgabe wird durch ein drahtloses Netzwerk der eingangs genannten Art dadurch gelöst,
dass eine Basisstation nach Empfang eines Reservierungs-Wunsches eines Terminals für die Übertragung von Nutzdaten über einen Kanal zur Speicherung des Reservierungs-Wunsches vorgesehen ist, wenn die Basisstation dem Terminal keinen Kanal zuweisen kann.

Unter dem erfindungsgemäßen drahtlosen Netzwerk ist ein Netzwerk mit mehreren Funkzellen zu verstehen, in denen jeweils eine Basisstation und mehrere Terminals Steuer- und Nutzdaten drahtlos übertragen. Eine drahtlose Übertragung dient zur Übertragung von Informationen z.B. über Funk-, Ultraschall- oder Infrarotwege.

Bei einem Reservierungs-Wunsch überprüft eine Basisstation, ob der von einem Terminal gewünschte Kanal zur Übertragung von Nutzdaten zur Verfügung steht. Ist dies nicht der Fall wird erfindungsgemäß der Reservierungs-Wunsch gespeichert und ein Kanal dem Terminal zugewiesen, wenn dieser zur Verfügung steht. Hierdurch ist es nicht notwendig, dass das Terminal dauernd versucht einen freien Kanal zugeteilt zu bekommen. Somit verringert sich die Verkehrslast im Netzwerk.

Patentanspruch 2 gibt an, dass ein Terminal einen Reservierungs-Wunsch zur Verwendung eines dedizierten Kanals zur Paketübertragung über einen kollisionsbehafteten Kanal an die Basisstation sendet und dass die Basisstation eine Antwort über einen Steuerkanal an das Terminal sendet. Ein Terminal sendet erst nach einer vorgegebenen Zeit einen weiteren Reservierungs-Wunsch aus. Eine solche Antwort kann eine Bestätigungsmeldung sein, falls der Reservierungs-Wunsch gespeichert worden ist, oder einer Zuteilungs-Bestätigung, falls der gewünschte Kanal verfügbar ist (Patentanspruch 3). Wann eine gespeicherte Reservierungs-Nachricht gelöscht wird, ist in Anspruch 4 angegeben.

Die Erfindung bezieht sich auch auf eine Basisstation eines drahtlosen Netzwerks mit mehreren zugeordneten Terminals.

Ausführungsbeispiele der Erfindung werden nachstehend anhand der Fig. näher erläutert, die ein drahtloses Netzwerk mit mehreren Basisstationen und Terminals zeigt.

In Fig. ist ein drahtloses Netzwerk, z.B. Funknetzwerk, mit mehreren Basisstationen 1 bis 3 und mehreren Terminals 4 bis 14 dargestellt. Eine Basisstation 1 bis 3 stellt eine Funk-Netzwerk-Steuerung (radio network controller) dar. Einer Basisstation 1 bis 3 sind bestimmte Terminals 4 bis 14 zugeordnet. In dem in Fig. dargestellten Beispiel sind der Basisstation 1 die Terminals 4 bis 7, der Basisstation 2 die Terminals 8 bis 10 und der Basisstation 3 die Terminals 11 bis 14 zugewiesen. Ein Steuerdatenaustausch findet zumindest zwischen der Basisstation und den Terminals statt. Ein Nutzdatenaustausch kann sowohl zwischen der Basisstation und den Terminals als auch direkt zwischen den Terminals durchgeführt werden. In beiden Fällen wird von der Basisstation die Verbindung zur Übertragung von Nutzdaten aufgebaut. Die Terminals 4 bis 14 sind in der Regel Mobilstationen, die von einer fest installierten Basisstation 1 bis 3 gesteuert werden. Eine Basisstation 1 bis 3 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall T_{C} bezeichnet. 1/T_{C} ist die Chiprate. Die Multiplikation bzw. Modulation des Datensignals mit dem pseudo-zufälligen Rechtecksignal hat eine Spreizung des Spektrums um den Spreizungsfaktor T/T_{C} zur Folge, wobei T die Dauer eines Rechteckimpulses des Datensignals ist.

Nutzdaten und Steuerdaten zwischen wenigstens einem Terminal und einer Basisstation werden über von der Basisstation vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Basisstation zu den Terminals wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet. Beispielsweise kann ein Downlink-Steuerkanal vorgesehen sein, der benutzt wird, um von der Basisstation Steuerdaten vor einem Verbindungsaufbau an alle Terminals zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal zur Basisstation kann beispielsweise ein von der Basisstation zugewiesener Uplink-Steuerkanal verwendet werden, auf den aber auch andere Terminals zugreifen können. Ein Uplink-Kanal, der von mehreren oder allen Terminals benutzt werden kann, wird als gemeinsamer Uplink-Kanal (common uplink channel) bezeichnet. Nach einem Verbindungsaufbau z.B. zwischen einem Terminal und der Basisstation werden Nutzdaten über einen Downlink- und ein Uplink-Nutzkanal übertragen. Kanäle, die nur zwischen einem Sender und einem Empfänger aufgebaut werden, werden als dedizierte Kanäle (dedicated channel = DCH) bezeichnet. In der Regel ist ein Nutzkanal ein dedizierter Kanal, der von einem dedizierten Steuerkanal zur Übertragung von verbindungsspezifischen Steuerdaten begleitet werden kann.

Zur Einbindung eines Terminals zu einer Basisstation ist ein kollisionsbehafteter Kanal zuständig, der im folgenden als RACH-Kanal (RACH = Random Access Channel) bezeichnet wird. Die Basisstation sendet Antwortmeldungen, die von den Terminals über den RACH-Kanal angefordert worden sind, über einen Downlink-Kanal, der als FACH-Kanal (forward access channel) bezeichnet wird.

Ein dedizierter Kanal kann Nutzdaten in Form von Paketen übertragen (Paket-Übertragung). Dedizierte Kanäle zur Paketübertragung werden Terminals von der zugeordneten Basisstation zugewiesen, nachdem ein Terminal einen Reservierungs-Wunsch über einen RACH-Kanal ausgesendet hat. Ist die Nachricht, die aus mehreren Paketen bestehen kann, vollständig übertragen worden, wird der dedizierte Kanal wieder freigegeben.

Eine Basisstation verwaltet N_{Paket} dedizierte Kanäle zur Paketübertragung. Wenn alle N_{Packet} dedizierten Kanäle an Terminals vergeben sind, muss ein Reservierungs-Wunsch eines weiteren Terminals zur Übertragung von Paketen über einen solchen dedizierten Kanal von der zugeordneten Basisstation zurückgewiesen werden.

Damit ein Terminal nicht nach einer Zurückweisung von einer Basisstation andauernd einen Reservierungs-Wunsch aussendet, wird erfindungsgemäß der korrekt zur Basisstation übertragene Reservierungs-Wunsch nach einem dedizierten Kanal zur Paketübertragung über einen bestimmten Zeitraum in der Basisstation gespeichert. Innerhalb dieses bestimmten Zeitraums setzt das Terminal einen weiteren Reservierungs-Wunsch ab. Die Basisstation, die einen solchen Reservierungs-Wunsch erhält, sendet dem Terminal eine Zuteilungs-Bestätigung, wenn der dedizierte Kanal zugewiesen werden kann. Anderenfalls bestätigt die Basisstation dem Terminal den Empfang. Die Bestätigungsmeldung oder Antwort der Basisstation enthält außer dem Empfang des Reservierungs-Wunsches eine Angabe, dass der Wunsch in einer Warteschlange für eine Anzahl von Nₛ Zeitabschnitten (Anzahl von Zeitschlitzen oder Rahmen) bleibt. Wenn innerhalb dieser Periode ein dedizierter Kanal der gewünschten Bitrate verfügbar ist, wird die Basisstation eine Zuteilungs-Bestätigung (mit der zu benutzenden Nummer des dedizierten Kanals) zu dem Terminal senden, so dass das betreffende Terminal seine Pakete zu der Basisstation oder einem anderen Terminal übertragen kann.

Ein dedizierter Kanal, der von einem Terminal angefordert wird und der als Reservierungs-Wunsch in der Basisstation gespeichert, aber noch nicht zugewiesen werden kann, wird als vor-reservierter dedizierter Kanal bezeichnet.

Wenn die Periode von N_{S} Zeitabschnitten überschritten ist und während dieser Zeit kein dedizierter Kanal mit der spezifischen Bitrate verfügbar war, kann die Basisstation eine Zurückweisungsmeldung zu dem Terminal mit der Anweisung senden, dass das Terminal nicht mit weiteren Reservierungs-Wünschen für einen dedizierten Kanal für N_{blockiert} Zeitabschnitte fortfahren soll. Der Parameter N_{blockiert} kann variabel oder fest vorgegeben sein. Falls er fest vorgegeben ist, wird er den einzelnen Terminals über einen Verteil-Steuerkanal (broadcast control channel = BCH) mitgeteilt. Das Terminal wartet dann bis zur Aussendung eines neuen Reservierungs-Wunsches für N_{blockiert} Zeitabschnitte nach dem Ablauf der N_{S} Zeitabschnitte.

Wenn ein Terminal nach einer bestimmten Zeit nach Aussendung eines Reservierungs-Wunsches, Empfang einer Bestätigungsmeldung und innerhalb der Periode von N_{S} Zeitabschnitten entscheidet, dass es den vor-reservierten dedizierten Kanal nicht verwenden möchte, sendet das Terminal eine Freigabemeldung über den RACH-Kanal zur Basisstation. Die Basisstation entfernt den gespeicherten Reservierungs-Wunsch und gibt somit den vor-reservierten Kanal frei.

Durch diese bisher beschriebenen erfindungsgemäßen Maßnahmen ergibt sich gegenüber den bekannten Verfahren eine Verringerung der Verkehrslast auf dem RACH- bzw. FACH-Kanal. Wie Simulationen gezeigt haben, erhöhen die zusätzlichen Meldungen (Freigabemeldung, Bestätigungsmeldung, Zurückweisungsmeldung) die Verkehrslast im gesamten drahtlosen Netzwerk unwesentlich.

Die Parameter N_{S} und N_{blockiert} werden von der Basisstation oder einer mit der Basisstation gekoppelten weiteren Steuervorrichtung in Abhängigkeit von der Anzahl der benutzten und vor-reservierten dedizierten Kanäle eingestellt. Der weitere oben erwähnte Parameter N_{Packet}, der die Anzahl der zu verwendenden dedizierten Kanäle angibt, kann auch von der Basisstation oder einer mit der Basisstation gekoppelten weiteren Steuervorrichtung in Abhängigkeit von der Anzahl der nicht für Paketübertragung genutzten dedizierten Kanäle konfiguriert werden.

Der Wert N_{S} kann weiter optimiert werden, indem noch außer der Bitrate für jeden dedizierten Kanal die Anzahl und die Länge der jeweiligen Pakete einer Nachricht der Basisstation oder einer mit der Basisstation gekoppelten weiteren Steuervorrichtung mitgeteilt wird. Hieraus kann die Basisstation oder eine mit der Basisstation gekoppelte weitere Steuervorrichtung ermitteln, wann ein dedizierter Kanal für Paketübertragung wieder zur Verfügung steht. Die Bestätigungsmeldung kann auch außer den genannten Informationen eine Aussage darüber enthalten, nach wie viel Zeitabschnitten wieder ein dedizierter Kanal nicht mehr belegt ist.

Die von einer Basisstation über einen dedizierten Kanal empfangenen Pakete können zu einem mit der Basisstation gekoppelten, in der Fig. nicht näher dargestellten Festnetzwerk weitergeleitet werden. Dies können beispielsweise E-Mails sein, die von einem Terminal zu einem Terminal des Festnetzwerkes gesendet werden.

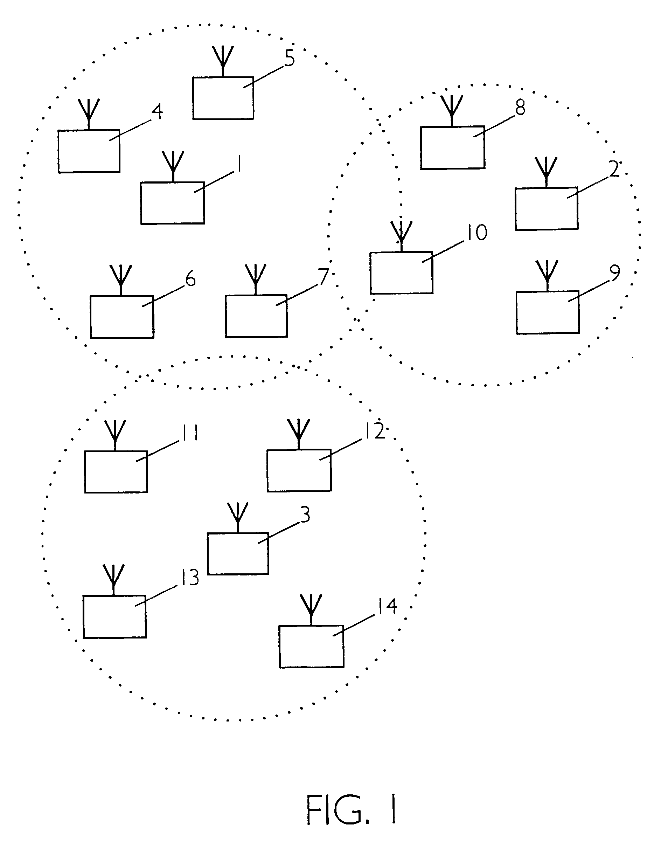

## Patentansprüche

1. Drahtloses Netzwerk mit mindestens einer Basisstation und mehreren zugeordneten Terminals zum Austausch von Nutz- und Steuerdaten,
dadurch gekennzeichnet,
dass eine Basisstation nach Empfang eines Reservierungs-Wunsches eines Terminals für die Übertragung von Nutzdaten über einen Kanal zur Speicherung des Reservierungs-Wunsches vorgesehen ist, wenn die Basisstation dem Terminal keinen Kanal zuweisen kann.

2. Drahtloses Netzwerk nach Anspruch 1,
dadurch gekennzeichnet,
dass ein Terminal zur Aussendung eines Reservierungs-Wunsches zur Verwendung eines dedizierten Kanals zur Paketübertragung über einen kollisionsbehafteten Kanal an die Basisstation vorgesehen ist,
dass das Terminal zur Aussendung eines weiteren Reservierungswunsches erst nach einer vorgegebenen Zeit vorgesehen ist und
dass die Basisstation zur Aussendung einer Antwort über einen Steuerkanal an das Terminal vorgesehen ist.

3. Drahtloses Netzwerk nach Anspruch 1,
dadurch gekennzeichnet,
dass die Basisstation nach Empfang des Reservierungs-Wunsches zur Aussendung einer Bestätigungsmeldung vorgesehen ist, falls der Reservierungs-Wunsch gespeichert wird, oder einer Zuteilungs-Bestätigung, falls der gewünschte Kanal verfügbar ist.

4. Drahtloses Netzwerk nach Anspruch 3,
dadurch gekennzeichnet,
dass die von der Basisstation ausgesendete Bestätigungsmeldung eine Aussage darüber enthält, wann der gewünschte Kanal verfügbar sein wird.

5. Drahtloses Netzwerk nach Anspruch 1,
dadurch gekennzeichnet,
dass die Basisstation zur Löschung des gespeicherten Reservierungs-Wunsches und zur Aussendung einer Zurückweisungsmeldung vorgesehen ist, wenn der Reservierungs-Wunsch länger als ein vorgegebener Zeitabschnitt gespeichert ist, und
dass die Zurückweisungsmeldung angibt, wie lange das Terminal mit dem Aussenden eines weiteren Reservierungs-Wunsches warten soll.

6. Basisstation in einem drahtloses Netzwerk mit mehreren zugeordneten Terminals zum Austausch von Nutz- und Steuerdaten,
dadurch gekennzeichnet,
dass die Basisstation nach Empfang eines Reservierungs-Wunsches eines Terminals für die Übertragung von Nutzdaten über einen Kanal zur Speicherung des Reservierungs-Wunsches vorgesehen ist, wenn die Basisstation dem Terminal keinen Kanal zuweisen kann.
